# EUROPEAN PATENT SPECIFICATION

(11) **EP 0 892 329 B1**
(45) Date of publication and mention of the grant of the patent: **12.09.2001**
(21) Application number: 98202396.2
(22) Date of filing: 16.07.1998
(51) Int. Cl.: G05D 16/06

(54) **Gas pressure regulator**
Gasdruckregler
Régulateur de pression de gaz

(30) Priority: 19.07.1997 DE 19731088
(43) Date of publication of application: 20.01.1999
(73) Proprietor: Schlumberger Rombach GmbH, 76185 Karlsruhe (DE)
(72) Inventor: Uwe, Bax, 76133 Karlsruhe (DE); Gerhard, Möhrle, 76297 Stutensee (DE); Heinz, Schuhbaum, 76889 Barbelroth (DE); Andreas, Simon, 76199 Karlsruhe (DE); Otfried, Stuck, 76448 Durmersheim (DE); Harold, Zentner, 76297 Stutensee (DE)
(74) Representative: Dupont, Henri

(56) References cited:
- DE-A- 4 212 234
- FR-A- 1 264 276
- US-A- 3 459 215
- US-A- 3 730 428

## Description

The invention concerns a gas pressure regulator according to the preamble to claim 1.

A gas pressure regulator is known from the brochure "Gas Pressure Regulating Equipment ZR 20" from Messrs. J.B. Rombach GmbH, Karlsruhe, 1994, which has a housing in which a diaphragm valve arrangement is fitted, containing a total of four sheet metal-reinforced diaphragms with additional components, whereby a spring arrangement is also fitted in this device for pretensioning purposes, which is arranged separately in a sleeve fitted in the housing and supported by a cover. The gas pressure regulator possesses a compensation chamber, which is bounded by an operating and a compensating diaphragm and receives the gas pressure present in the supply line via a separate connecting line. A diaphragm valve arrangement of this type and admission of gas via the compensation chamber not only comprises a very large number of individual components but also requires correspondingly expensive assembly procedures.

A gas pressure regulator is also known from GB 2 078 341 A, which has several valve diaphragms inserted in the housing and under tension, which are connected to corresponding sections of a valve tappet via screw connections thus dividing the housing into several chambers. Here too, a large number of individual components are necessary, which require a correspondingly expensive assembly procedure.

The object of the invention is to create a gas pressure regulator complying with the preamble to claim 1, the valve arrangement of which requires fewer individual components and is therefore correspondingly easier to fit.

This object is achieved as stated in the characterising part of claim 1.

In this case, at least a part of the diaphragm valve arrangement is formed as a single component, whereby a compensation chamber is formed which receives the gaseous medium present via a valve tappet, which is hollow in this case, so that the diaphragm valve arrangement is reduced to very few components, for instance to one single component, which is simply placed as such in the housing of the gas pressure regulator, or is composed of two components so that assembly is very simple and easy.

Further embodiments of the invention are to be found in the description below and the sub-claims.

The invention is described in greater detail below using one of the embodiments shown in the enclosed illustrations.
Figure 1 shows part of an embodiment of a gas pressure regulator as a section, some of which is illustrated schematically.
Figure 2 shows a further embodiment of a valve arrangement for a gas pressure regulator in section form.

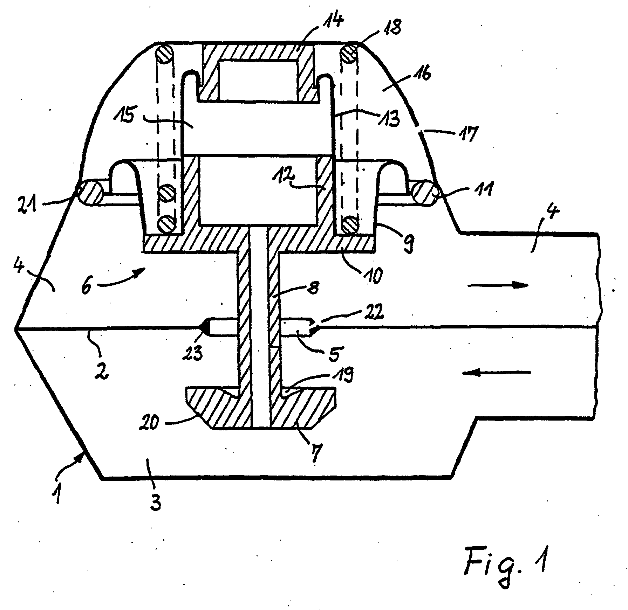

The embodiment of a gas pressure regulator shown in figure 1 includes a housing 1, only indicated schematically, which has corresponding intake and outlet connections (not shown) for insertion in a gas pipeline. The housing 1 is subdivided by a partition 2 into an intake chamber 3, connected to the intake pipe, and a discharge chamber 4, connected to the outlet pipe, which are connected together via a nozzle aperture 5 in the partition 2.

The housing 1, which includes a dome section which extends over the discharge chamber 4, holds a diaphragm valve arrangement 6 in this area which controls the opening and closing of the nozzle aperture 5.

The diaphragm valve arrangement 6, which consists entirely of a flexible rubber material in this embodiment and of one single component, includes a disc-shaped closing element 7, which is connected to a hollow valve tappet 8, which extends through the nozzle aperture 5. On the end turned away from the closing element 7, the valve tappet 8 has an operating diaphragm 9, which has a disc-shaped central section 10 and an O-seal 11 running round the outer edge. Moreover, the central part 10 is extended in the direction of the axis of the valve tappet 8 by a stub connection 12, the edge of the unobstructed circumference of which is connected via a compensating diaphragm 13 to a cap-shaped supporting component 14, which is supported in the housing 1. A compensation chamber 15 is formed in this way which is connected to the chamber 3 via the hollow valve tappet 8. A chamber 16 is situated on the outside of the compensating diaphragm 13 and the operating diaphragm 9, which is connected to the atmosphere via an aperture 17 in the housing 1.

If the entire component is not manufactured as one piece because of differing wall thicknesses, it is possible to injection-mould the thick-walled components 7, 8, 10 and 14 first and secondly a single thin-walled component 9, 13, which is then vulcanised horizontally or vertically on to the thick-walled component in order to form one single component part.

In addition, a coil spring 18 is provided which supports itself on one side adjacent to the support component 14 in the housing 1 and on the other side supports itself on the central component 10, pretensioning the closing element 7 in the open position and the operating diaphragm 9 in the closed position.

To enable the diaphragm valve arrangement 6 (without the coil spring 18) to be used as a single component, the closing element 7 is provided firstly with a notch 19 which runs round the valve tappet 8, and secondly with a tapered insertion point 20. The notch 19 is necessary for the assembly of the rubber seat (not shown) through the nozzle aperture 5.

In this way, the diaphragm valve arrangement can be inserted with the coil spring into the cap-shaped section, supported if necessary on a shoulder 21, which however, does not have to be present, whereby the closing element 7 is routed through the nozzle aperture 5 so that the diaphragm valve arrangement 6 is ready for operation.

Gas flows from the chamber 3, through the nozzle aperture 5, into the discharge chamber 4, whereby firstly the gas pressure presses the operating diaphragm 9 against the pretensioning of the coil spring 18 from the closed position to the open position and secondly presses the O-seal 11 so that it engages with the housing 1, forming a seal. If the gas pressure is too high, the closing element 7 closes the nozzle aperture 5. The external air pressure in the chamber 16, which strikes the operating diaphragm 9 on the side which is turned away from the side receiving the gas pressure, serves here as the reference pressure.

If no gas pressure is present, the nozzle aperture 5 is closed because of the pretensioning from the coil spring 18 which urges the central component to rest against the nozzle wall 23 (first closing position of the regulator). It is useful to fit a very small aperture 22 in a nozzle wall 23, which forms the nozzle aperture 5, which can be a part of the partition 2, through which the gas-bearing pipeline can fill up again first of all subsequently, when gas pressure is present again. If the closing element 7 closes the nozzle aperture 5, the aperture 22 is also closed (second closing position of the regulator).

The housing 1 may also hold an insert (not shown), which supports the coil spring 18 and the supporting component 14 and enables infinitely variable adjustment of the discharge pressure and/or a change-over to other pressure ranges (e.g. from town gas to natural gas) by permitting the use of an additional spring.

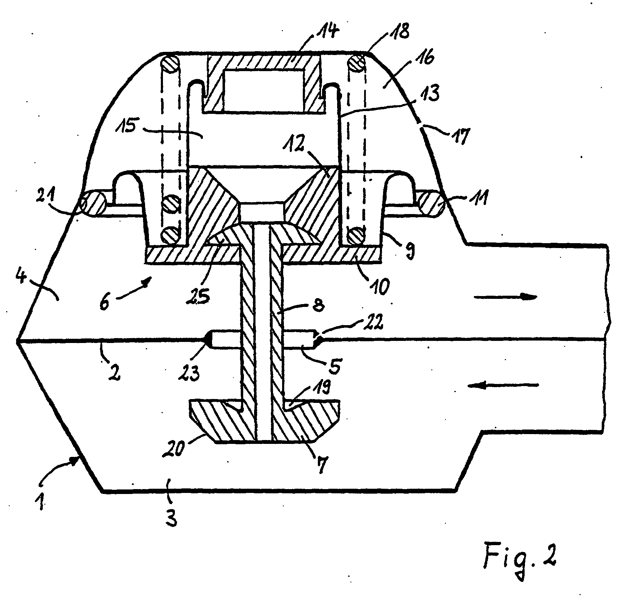

In the embodiment shown in figure 2, the valve tappet 8 is provided with a head 25, shown here as a round head, on the opposite end to the closing element 7 and is manufactured with the closing element 7 as a separate piece, at least initially. The round head 25 can be inserted in a corresponding recess, which is formed between the central component 10 and the inside of the stub connection 12, during assembly of the gas pressure regulator. Provided that the closing element 7 can be passed through the nozzle aperture 5, injection-moulding can also take place around the head 25 to form the diaphragm valve arrangement 6.

The valve tappet 8 with head 25 can also take the form of a metal component, whereby it can be inserted through the nozzle aperture 5 into the corresponding recess, which is formed between the central component 10 and the inside of the stub connection 12. In this case, the closing element 7 can be formed by positioning on a flexible rubber plate (not shown) arranged on the end of the valve tappet 8.

The head 25 can also be formed separately from the valve tappet 8 and be inserted and/or injection moulded into the corresponding recess, which is formed between the central component 10 and the inside of the stub connection 12, whereby, when fitting the valve tappet 8, it is engaged with the head 25, for example via a screw fixing, after insertion through the nozzle aperture 5.

## Claims

1. Gas pressure regulator with a housing (1), which is divided into an intake chamber (3) and a discharge chamber (4) by a partition (2) provided with a nozzle aperture (5) whereby the nozzle aperture (5) can be closed by a diaphragm valve arrangement (6) which includes an operating diaphragm (9), which is pretensioned by a spring, receiving a reference pressure on one side and a gaseous medium on the other side, connected to a valve tappet (8), whereby a compensation chamber (15), receiving the gaseous medium, is provided between the operating diaphragm (9) and a compensating diaphragm (13) and the valve tappet (8) includes a closing element (7) on the side of the nozzle aperture (5) turned away from the operating diaphragm (9) **characterized in that** the operating diaphragm (9) is connected to the compensating diaphragm (13) as a single component, whereby the valve tappet (8) is hollow and connects the intake chamber (3) with the compensation chamber (15).

2. Gas pressure regulator according to claim 1, **characterized in that** the operating diaphragm (9) includes a disc-shaped central component (10), against which the spring (18) is supported.

3. Gas pressure regulator according to claim 1 or 2, **characterized in that** the operating diaphragm (9) includes an O-seal (11) around the circumference, which can be put under pressure by the gaseous medium to form a seal with the housing (1).

4. Gas pressure regulator according to one of the claims 1 to 3, **characterized in that** the compensating diaphragm (13) is connected as a single component to a supporting component (14), which is in itself supported in the housing (1).

5. Gas pressure regulator according to one of the claims 1 to 4, **characterized in that** the central component (10) has a stub connection (12) to which the compensating diaphragm (13) is connected.

6. Gas pressure regulator according to one of the claims 1 to 5, **characterized in that** the valve tappet (8) and the closing element (7) form one component.

7. Gas pressure regulator according to one of the claims 1 to 6, **characterized in that** the valve tappet (8) forms a single component with the operating diaphragm (9).

8. Gas pressure regulator according to claim 7, **characterized in that** the closing element (7) can pass through the nozzle aperture (5).

9. Gas pressure regulator according to one of the claims 1 to 7, **characterized in that** the valve tappet (8) includes a head (25), which can be or is inserted in a recess adjacent to the operating diaphragm (9).

10. Gas pressure regulator according to claim 9, **characterized in that** the head (25) can pass through the nozzle aperture (5).

11. Gas pressure regulator according to claim 9, **characterized in that** the head (25) is injection-moulded from the material forming the operating diaphragm (9) and adjacent components.

12. Gas pressure regulator according to anyone of the preceding claims, **characterized in that** said gas pressure regulator has two closing positions either with the central component resting on the part (23) of the partition (2) surrounding the nozzle aperture (5) or with the closing element (7) being in contact with that the part (23) of the partition (2).

13. Gas pressure regulator according to anyone of the preceding claims, **characterized in that** at least a part of the diaphragm valve arrangement (6) is injection-moulded as a single component in a flexible rubber material.

## Patentansprüche

1. Gasdruckregler mit einem Gehäuse (1), das in eine Zuströmkammer (3) und eine Abströmkammer (4) durch eine mit einer Düsenöffnung (5) versehene Trennwand (2) geteilt ist, wobei die Düsenöffnung (5) durch eine Membranventilanordnung (6) verschließbar ist, die eine federvorgespannte, von einer Seite mit einem Referenzdruck und abströmkammerseitig von einem gasförmigen Medium beaufschlagten Arbeitsmembran (9) umfaßt, die mit einem Ventilstößel (8) verbunden ist, wobei zwischen der Arbeitsmembran (9) und einer Ausgleichsmembran (13) eine vom gasförmigen Medium beaufschlagte Ausgleichskammer (15) vorgesehen ist und der Ventilstößel (8) ein Schließelement (7) auf der der Arbeitsmembran (9) abgewandten Seite der Düsenöffnung (5) umfaßt, **dadurch gekennzeichnet, daß** die Arbeitsmembran (9) einstückig mit der Ausgleichsmembran (13) verbunden ist, wobei der Ventilstößel (8) hohl ist und die Zuströmkammer (3) mit der Ausgleichskammer (15) verbindet.

2. Gasdruckregler nach Anspruch 1, **dadurch gekennzeichnet, daß** die Arbeitsmembran (9) ein tellerförmiges Mittelteil (10), auf dem sich die Feder (18) abstützt, umfaßt.

3. Gasdruckregler nach Anspruch 1 oder 2, **dadurch gekennzeichnet, daß** die Arbeitsmembran (9) einen umlaufenden, durch das gasförmige Medium in Dichteingriff mit dem Gehäuse (1) drückbaren 0-Ring (11) umfaßt.

4. Gasdruckregler nach einem der Ansprüche 1 bis 3, **dadurch gekennzeichnet, daß** die Ausgleichsmembran (13) einstückig mit einem sich im Gehäuse (1) abstützenden Stützteil (14) verbunden ist.

5. Gasdruckregler nach einem der Ansprüche 1 bis 4, **dadurch gekennzeichnet, daß** der Mittelteil (10) einen Stutzen (12) aufweist, mit dem die Ausgleichsmembran (13) verbunden ist.

6. Gasdruckregler nach einem der Ansprüche 1 bis 5, **dadurch gekennzeichnet, daß** der Ventilstößel (8) und das Schließelement (7) einstückig ausgebildet sind.

7. Gasdruckregler nach einem der Ansprüche 1 bis 6, **dadurch gekennzeichnet, daß** der Ventilstößel (8) einstückig mit der Arbeitsmembran (9) ausgebildet ist.

8. Gasdruckregler nach Anspruch 7, **dadurch gekennzeichnet, daß** das Schließelement (7) durch die Düsenöffnung (5) hindurch führbar ist.

9. Gasdruckregler nach einem der Ansprüche 1 bis 7, **dadurch gekennzeichnet, daß** der Ventilstößel (8) einen Kopf (25) umfaßt, der in eine Ausnehmung benachbart zur Arbeitsmembran (9) einsetzbar oder eingesetzt ist.

10. Gasdruckregler nach Anspruch 9, **dadurch gekennzeichnet, daß** der Kopf (25) durch die Düsenöffnung (5) hindurchführbar ist.

11. Gasdruckregler nach Anspruch 9, **dadurch gekennzeichnet, daß** der Kopf (25) von dem die Arbeitsmembran (9) und benachbarte Teile bildenden Material umspritzt ist.

12. Gasdruckregler gemäß einem der vorgenannten Ansprüche, **dadurch gekennzeichnet, daß** besagter Gasdruckregler zwei Schließpositionen hat, eine, bei der die zentrale Komponente auf dem Teil (23) der Zwischenwand (2) bleibt, die die Ansatzöffnung (5) umschließt, und die andere, bei der das Schließelement (7) mit dem Teil (23) der Zwischenwand (2) in Kontakt ist.

13. Gasdruckregler gemäß einem der vorgenannten Ansprüche, **dadurch gekennzeichnet, daß** wenigstens ein Teil der Membranventil-Anordnung (6) durch Einspritzen in Form einer einzigen Komponente in einem biegsamen Kautschukmaterial geformt wird.

## Revendications

1. Régulateur de pression de gaz ayant un logement (1), divisé en une chambre d'admission (3) et une chambre de décharge (4) par une cloison (2) pourvue d'un orifice d'ajutage (5), l'orifice d'ajutage (5) pouvant être fermé par un agencement de soupape à membrane (6) qui comprend une membrane d'actionnement (9), précontrainte par un ressort, recevant une pression de référence sur un côté et un fluide gazeux de l'autre côté, et reliée à un poussoir de soupape (8), ce par quoi une chambre de compensation (15), recevant le fluide gazeux, est formée entre la membrane d'actionnement (9) et une membrane de compensation (13), et le poussoir de soupape (8) comprenant un élément de fermeture (7) du côté de l'orifice d'ajutage (5) qui est opposé à la membrane d'actionnement (9), **caractérisé en ce que** la membrane d'actionnement (9) est reliée à la membrane de compensation (13) sous la forme d'un composant unitaire, le poussoir de soupape (8) étant creux et raccordant la chambre d'admission (3) à la chambre de compensation (15).

2. Régulateur de pression de gaz selon la revendication 1, **caractérisé en ce que** la membrane d'actionnement (9) comprend un composant central en forme de disque (10), contre lequel est supporté le ressort (18).

3. Régulateur de pression de gaz selon la revendication 1 ou 2, **caractérisé en ce que** la membrane d'actionnement (9) comprend un joint torique (11) autour de la circonférence, qui peut être mis sous pression par le fluide gazeux, pour former une étanchéité avec le logement (1).

4. Régulateur de pression de gaz selon l'une quelconque des revendications 1 à 3, **caractérisé en ce que** la membrane de compensation (13) est raccordée, d'un seul tenant, à un composant de support (14), qui est lui-même supporté dans le logement (1).

5. Régulateur de pression de gaz selon l'une quelconque des revendications 1 à 4, **caractérisé en ce que** le composant central (10) a un raccord de bout (12) auquel la membrane de compensation (13) est reliée.

6. Régulateur de pression de gaz selon l'une quelconque des revendications 1 à 5, **caractérisé en ce que** le poussoir de soupape (8) et l'élément de fermeture (7) forment un composant.

7. Régulateur de pression de gaz selon l'une quelconque des revendications 1 à 6, **caractérisé en ce que** le poussoir de soupape (8) forme un seul composant avec la membrane d'actionnement (9).

8. Régulateur de pression de gaz selon la revendication 7, **caractérisé en ce que** l'élément de fermeture (7) peut passer à travers l'orifice d'ajutage (5).

9. Régulateur de pression de gaz selon l'une quelconque des revendications 1 à 7, **caractérisé en ce que** le poussoir de soupape (8) comprend une tête (25), qui peut être ou qui est insérée dans un évidement contigu à la membrane d'actionnement (9).

10. Régulateur de pression de gaz selon la revendication 9, **caractérisé en ce que** la tête (25) peut passer à travers l'orifice d'ajutage (5).

11. Régulateur de pression de gaz selon la revendication 9, **caractérisé en ce que** la tête (25) est moulée par injection à partir du métal formant la membrane d'actionnement (9) et de composants contigus.

12. Régulateur de pression de gaz selon l'une quelconque des revendications précédentes, **caractérisé en ce que** ledit régulateur de pression de gaz a deux positions de fermeture, l'une où le composant central reste sur la partie (23) de la cloison (2) entourant l'orifice d'ajutage (5), et l'autre où l'élément de fermeture (7) est en contact avec la partie (23) de la cloison (2).

13. Régulateur de pression de gaz selon l'une quelconque des revendications précédentes, **caractérisé en ce qu'**au moins une partie de l'agencement de soupape à membrane (6) est moulé par injection, sous la forme d'un unique composant, dans un matériau caoutchouc souple.
